Europäisches Patentamt

European Patent Office

Office européen des brevets

(19)

(11) Veröffentlichungsnummer: **0 304 551 B1**

(12) **EUROPÄISCHE PATENTSCHRIFT**

(45) Veröffentlichungstag der Patentschrift: **02.01.92**

(51) Int. Cl.5: **C21C 7/072**

(21) Anmeldenummer: **88108193.9**

(22) Anmeldetag: **21.05.88**

(54) Spülstein und Verfahren zu dessen Herstellung.

(30) Priorität: **21.08.87 DE 3727938**

(43) Veröffentlichungstag der Anmeldung:
**01.03.89 Patentblatt 89/09**

(45) Bekanntmachung des Hinweises auf die
Patenterteilung:
**02.01.92 Patentblatt 92/01**

(84) Benannte Vertragsstaaten:
**AT BE CH DE ES FR GB GR IT LI LU NL SE**

(56) Entgegenhaltungen:
**EP-A- 0 187 924**
**EP-A- 0 221 250**
**AT-B- 376 701**
**DE-A- 3 246 937**
**DE-A- 3 625 478**

**PATENT ABSTRACTS OF JAPAN Band 5, Nr.
112 (M-79) (784) 21 Juli 1981;& JP - 56 53847
(ASAHI GLASS) 13.05.1981**

**PATENT ABSTRACTS OF JAPAN Band 9, Nr.
166 (C-290) (1889) 11. Juli 1985; & JP-A-60
366 12 (KAWASAKI SEITETSU) 25.02.1985**

(73) Patentinhaber: **DIDIER-WERKE AG
Lessingstrasse 16-18
W-6200 Wiesbaden(DE)**

(72) Erfinder: **Rothfuss, Hans
Scheidertalstrasse 36
W-6204 Taunusstein 1(DE)**
Erfinder: **Kopia, Jochen
Vierwindenhöhe 46
W-5413 Bendorf(DE)**
Erfinder: **Sauthoff, Jürgen
Rüdesheimerstrasse 36
W-6200 Wiesbaden(DE)**

(74) Vertreter: **Brückner, Raimund, Dipl.-Ing.
c/o Didier-Werke AG Lessingstrasse 16-18
W-6200 Wiesbaden(DE)**

# Beschreibung

Die Erfindung betrifft einen Gasspülstein gemäß dem Oberbegriff des Anspruchs 1.

Ein solcher Gasspülstein ist aus der EP 0 221 250 A1 bekannt. Dabei verlaufen vier gradlinige, winkelsymmetrisch über den Umfang des Innenteils verteilte und sich je über einen wesentlichen Bereich der Umfangsfläche des Innenteils erstreckende Kanäle durch den gesamten Gasspülstein, was jedoch zu einer ungleichmäßigen und unkontrollierbaren Gaszufuhr in das metallurgische Gefäß führen kann.

Die aus der DE 32 46 937 bekannte z.B. für eine metallurgische Lanze verwendete Düse besteht aus einem feuerfesten Formkörper, welcher eine richtungsabhängige Porosität oder Durchlässigkeit aufweist. Die netzförmigen, in dem feuerfesten Formteil verlaufenden Kanäle sind durch ein eingebettetes Kunststoffnetz gebildet, welches sich an das Ende eines in den Formkörper mit eingeformten metallischen Rohres anschließt. Das Kunststoffnetz wird nach dem Einformen ausgebrannt. Solche Verbrennungsvorgänge sind jedoch unerwünscht.

Aufgabe der Erfindung ist es, einen Gasspülstein der gattungsgemäßen Art vorzuschlagen, welches netzförmig durchziehende Kanäle aufweist und auf einfache Weise herstellbar ist.

Diese Aufgabe wird erfindungsgemäß mit den Merkmalen des kennzeichnenden Teils des Anspruchs 1 gelöst.

Durch den zweiteiligen Aufbau des Formkörpers und die Anordnung der netzförmig verlaufenden Kanäle in der Trennfläche zwischen einem Innenteil und einem Außenteil ist erreicht, daß Teilkanäle vor dem Zusammensetzen des Innenteils und des Außenteils offen sind und daher beim Herstellungsprozeß der Formkörperteile trotz der verhältnismäßig aufwendigen Netzstruktur mit ausgeformt werden können. Es müssen dementsprechend keine die Kanäle bildenden Formteile aus dem Formkörper herausgebrannt oder mit chemischen Mitteln entfernt werden. Die netzförmig verlaufenden Kanäle werden in der gewünschten Lage zueinander und in ihrer Bemessung dadurch, daß Oberseite und Unterseite des Formkörpers von dem Innenteil und dem Außenteil gemeinsam gebildet werden, reproduzierbar festgelegt und durchziehen den gesamten Formkörper, so daß die Gaszufuhr über einen vor dem Formkörper ausgebildeten Gassammelraum erfolgen kann, in welchen der Gasanschlußstutzen mündet. Außerdem liegen die netzförmig verlaufenden Kanäle trotz ihrer einfachen Herstellbarkeit geschützt im Inneren des Formkörpers.

Zur Herstellung des Außenteils des Formkörpers kann eine Form verwendet werden, in welcher ein kegelstumpfförmiger Formkern eingesetzt wird. Zur Ausbildung der Kanäle innen am Außenteil kann der Formkern mit vorspringenden Stegen versehen sein, welche den am Außenteil geformten Kanälen entsprechen. Der Formkern kann aber auch lösbar mit einem Netz aus biegsamem Material, wie insbesondere aus dichtem Kunststoff oder Metall überzogen sein. Die Stege des Netzes entsprechend dann den netzartigen Kanälen innen am Außenteil. Für die Herstellung des Innenteils des Formkörpers kann insbesondere eine Form verwendet werden, welche mit den Kanälen des Innenteils entsprechenden vorspringenden Stegen versehen ist.

Weitere vorteilhafte Ausgestaltungen des aus Außenteil und Innenteil aufgebauten Formkörpers ergeben sich aus den Ansprüchen 2 bis 6.

Bei dem Verfahren zur Herstellung der Teile des Formkörpers aus feuerfestem keramischem Material kann eine tonerdereiche Mischung oder eine Mischung auf der Basis von Magnesiasinter verwendet werden. Die Mischungen enthalten jeweils die Komponenten feuerfestes körniges Material, keramisches Bindemittel und Anmachflüssigkeit.

Die Teile des Formkörpers können durch Gießen oder Pressen geformt, anschließend getrocknet und eventuell gebrannt werden.

Der Aufbau des Gasspülsteins und das Verfahren zu seiner Herstellung wird im Zusammenhang mit den Figuren 1 bis 11 näher erläutert. Es zeigen:

Figur 1    Außenteil und Innenteil eines Spülsteins im Schnitt,

Figur 2    Außenteil im Schnitt mit Kanälen in Ebenen der Kegelachse,

Figur 3    zum Außenteil nach Figur 2 zugehörender Innenteil im Schnitt mit Kanälen konzentrisch zur Kegelachse,

Figur 4    Außenteil im Schnitt mit Kanälen schraubenlinienförmig zur Kegelachse,

Figur 5    zum Außenteil nach Figur 4 zugehörender Innenteil im Schnitt mit Kanälen in Ebenen der Kegelachse,

Figur 6    Außenteil im Schnitt mit Kanälen schraubenlinienförmig zur Kegelachse,

Figur 7    zum Außenteil nach Figur 6 zugehörender Innenteil im Schnitt mit Kanälen schraubenlinienförmig zur Kegelachse,

Figur 8    Außenteil im Schnitt mit netzförmigen Kanälen,

Figur 9    zum Außenteil nach Figur 8 zugehörender Innenteil im Schnitt,

Figur 10    Außenteil mit Form und Formkern,

Figur 11     Innenteil mit Form.

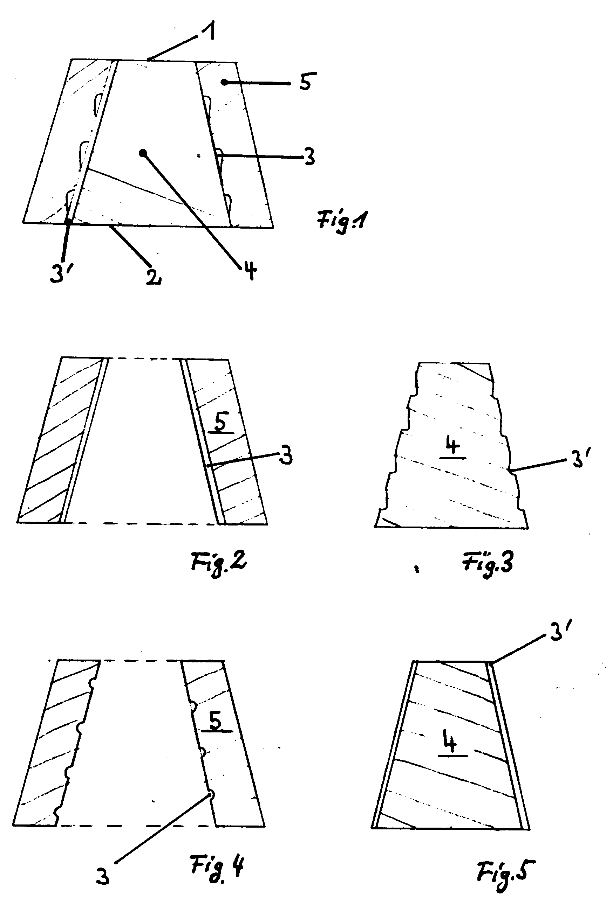

Die Figur 1 zeigt von einem Spülstein aus feuerfestem keramischen Material das Außenteil 5 und den in diesen eingepaßten Innenteil 4. Die weitere allgemein bekannte Ausstattung des Spülsteins, die aus dem Gasanschlußstutzen, dem Blech an der Unterseite 2 des Gasspülsteins, dem Gassammelraum, und der über die Höhe des Spülsteins von der Unterseite zur Oberseite reichenden Blechhülle am Außenteil besteht, ist, wie auch in den übrigen Figuren, nicht dargestellt. Das aus feuerfestem keramischen Material bestehende Außenteil mit dem eingesetzten Innenteil wird hier kurz als Spülstein bezeichnet.

Der Spülstein nach Figur 1 ist aus einem Innenteil 4 und einem Außenteil 5 zusammengesetzt. Beide Teile 4, 5 bilden gemeinsam die Oberseite 1 und die Unterseite 2. Das Innenteil 4 ist kegelstumpfförmig gestaltet und das Außenteil 5 umschließt das Innenteil 4. Das Außenteil besitzt innen konzentrisch zur Kegelachse verlaufende Kanäle 3. Das Innenteil besitzt außen in Ebenen der Kegelachse verlaufende Kanäle 3′, die gleichmäßig über die Mantelfläche des Kegels verteilt sein sollen. Die Kanäle 3 und 3′ verlaufen in der Trennfläche zwischen Außenteil und Innenteil und kreuzen sich.

Bei den Figuren 2, 4, 6, 8 haben die Außenteile 5 innen Kanäle, die unterschiedlich ausgerichtet sind. Mit den zugeordneten Innenteilen 4 nach Figuren 3, 5, 7, 9 ergeben sich durch Zusammensetzen von Innenteil und Außenteil in der Trennfläche die netzförmig verlaufenden Kanäle.

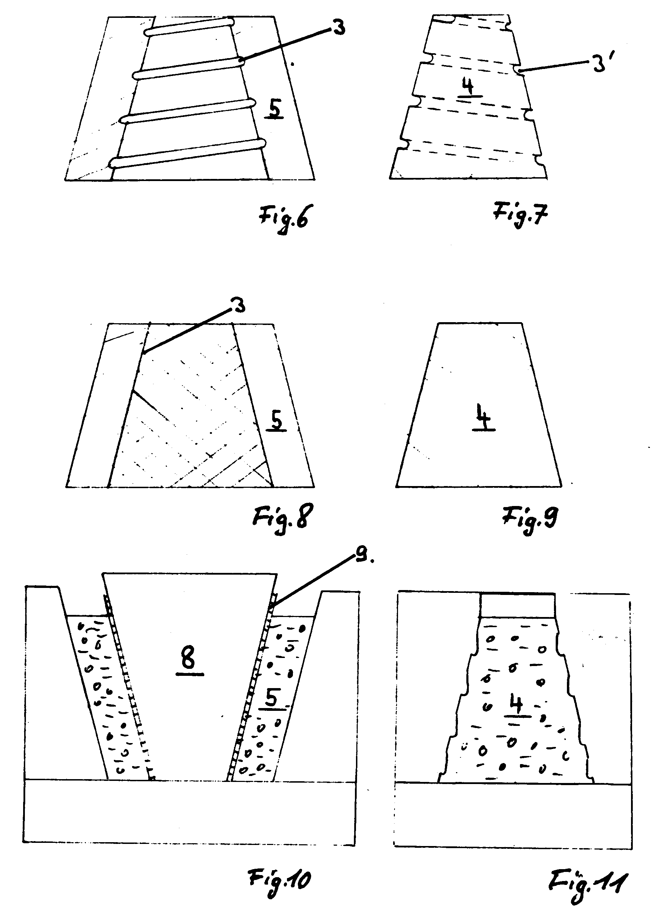

Bei den Figuren 2 und 5 liegen Kanäle in Ebenen der Kegelachse vor. Das Innenteil nach Figur 3 besitzt V-förmige konzentrisch zur Kegelachse verlaufende Kanäle. Bei den Figuren 4, 6 und 7 liegen schraubenlinienförmig zur Kegelachse verlaufende Kanäle vor, wobei diese Kanäle bei Figuren 6 und 7 gegeneinander laufend ausgeformt sind. Das Außenteil nach Figur 8 besitzt innen netzförmig verlaufende Kanäle und das zugehörige Innenteil nach Figur 9 hat außen eine ebene Oberfläche ohne Kanäle.

Das Außenteil kann nach Figur 10 in einer Form durch Gießen aus einer feuerfesten keramischen Gießmasse hergestellt werden. Die schematisch dargestellte Form weist einen den Abmessungen des Innenteils entsprechenden Formkern 8 auf. Dieser ist mit einem biegsamen Netz 9 überzogen. Die Gestalt des Netzes 9 entspricht den gewünschten Kanälen 3. Nach der Formung und Verfestigung des Außenteils 5 wird aus diesem zunächst der Innendorn 8 und danach das Netz 9 abgezogen. Es bestehen dann an der Innenseite des Außenteils 5 die Kanäle 3.

Der Formkern nach Figur 10 kann auf seiner Oberfläche mit Stegen versehen sein, die der Ausbildung der Kanäle innen am Außenteil nach den Figuren 1, 2, 4 und 6 entsprechen. Bei einem Formkern mit schraubenlinienförmig zur Kegelachse verlaufenden Stegen läßt sich der Innendorn aus dem Außenteil 5 schraubenartig herausdrehen.

Unabhängig vom Außenteil 5 wird nach Figur 11 in einer Form ein Innenteil 4 gefertigt. Die Form ist innen mit konzentrisch zur Kegelachse verlaufenden V-förmigen Stegen versehen, die den Kanälen 3′ des Innenteils nach den Figuren 3, 5 und 7 entsprechen.

Das vorgefertigte Außenteil und das Innenteil werden zusammengesetzt, so daß sich die Kanäle 3 und die Kanäle 3′ kreuzen. Damit ist ein netzförmiger Verlauf der Kanäle 3, 3′ erreicht. Für das Festlegen des Innenteils in dem Außenteil kann ein in dünner Schicht aufgetragener Binder, wie z.B. eine wässrige Lösung von Wasserglas, Monoaluminiumphosphat oder ein wässriges Siliciumdioxidsol mitverwendet werden. Danach wird der Spülstein getrocknet oder bei Temperaturen von etwa 350° C getempert.

**Patentansprüche**

1. Gasspülstein für metallurgische Zwecke, mit einem mit einem Gasanschlußstutzen ausgestatteten Formkörper aus feuerfestem keramischem Material mit in diesem verlaufenden Kanälen (3, 3'), wobei der Formkörper aus einem keramischen kegelstumpfförmigen Innenteil (4) und einem dieses umschließenden keramischen Außenteil (5) zusammengesetzt ist, Oberseite (1) und Unterseite (2) des Formkörpers von dem Innenteil (4) und dem Außenteil (5) gemeinsam gebildet sind, und die Kanäle (3, 3') von der Unterseite (2) zu der Oberseite (1) in dem Formkörper verlaufen,
dadurch gekennnzeichnet,
daß die Kanäle (3, 3') dadurch netzförmig verlaufen, daß sich innen am Außenteil (5) vorgesehene Kanäle (3) und außen am Innenteil (4) vorgesehene Kanäle (3') kreuzen oder daß am Außenteil (5) die Kanäle (3) netzartig ausgeformt sind und am Innenteil (4) keine Kanäle (3, 3') ausgeformt sind oder am Außenteil (5) keine Kanäle (3, 3') ausgeformt sind und am Innenteil (4) die Kanäle (3') netzartig ausgeformt sind.

2. Gasspülstein nach Anspruch 1,
dadurch gekennzeichnet,
daß der Querschnitt der Kanäle (3, 3') U- oder V-förmig gestaltet ist.

3. Gasspülstein nach Anspruch 1 oder 2,
dadurch gekennzeichnet,
daß am Außenteil (5) die Kanäle (3) in Ebenen der Kegelachse und am Innenteil (4) die Kanäle (3') konzentrisch oder auf Schraubenlinien zur Kegelachse verlaufend angeordnet sind.

4. Gasspülstein nach Anspruch 1 oder 2, dadurch gekennzeichnet, daß am Außenteil (5) die Kanäle (3) konzentrisch zur Kegelachse oder auf Schraubenlinien zur Kegelachse verlaufen und am Innenteil (4) die Kanäle (3') in Ebenen der Kegelachse ausgeformt sind.

5. Gasspülstein nach Anspruch 1 oder 2, dadurch gekennzeichnet, daß am Außenteil (5) und am Innenteil (4) die Kanäle (3, 3') auf Schraubenlinien und gegeneinanderlaufend ausgeformt sind.

6. Gasspülstein nach Anspruch 1 oder 2, dadurch gekennzeichnet, daß die sich kreuzenden Kanäle (3, 3') auf Schraubenlinien verlaufen und symmetrisch zur Kegelachse ausgeformt sind.

## Claims

1. Gas flushing plug for metallurgical purposes with a shaped body of refractory ceramic material, provided with a gas pipe connector, with passages (3, 3') extending in it, the shaped body being composed of a ceramic, frusto-conical inner portion (4) and a ceramic outer portion (5) surrounding it, the upper surface (1) and lower surface (2) of the shaped body being defined by the inner portion (4) and the outer portion (5) together and the passages (3, 3') extending within the shaped body from the lower surface (2) to the upper surface (1), characterised in that the passages (3, 3') extend in a network due to the fact that passages (3) provided on the interior of the outer portion (5) and passages (3') provided on the exterior of the inner portion (4) cross over or that the passages (3) are formed on the outer portion (5) in a network and no passages (3, 3') are formed on the inner portion (4) or no passages (3, 3') are formed on the outer portion (5) and the passages (3') are formed on the inner portion (4) in a network.

2. Gas flushing plug as claimed in Claim 1, characterised in that the cross-section of the passages (3, 3') is U- or V-shaped.

3. Gas flushing plug as claimed in Claim 1 or 2, characterised in that the passages (3) are disposed on the outer portion (5) in planes of the cone axis and the passages (3') are disposed on the inner portion (4) concentrically or on helical lines about the cone axis.

4. Gas flushing plug as claimed in Claim 1 or 2, characterised in that the passages (3) extend on the outer portion (5) concentrically to the cone axis or on helical lines about the cone axis and the passages (3') are formed on the inner portion (4) in planes of the cone axis.

5. Gas flushing plug as claimed in Claim 1 or 2, characterised in that the passages (3, 3') are formed on the outer portion (5) and on the inner portion (4) on helical lines in opposite senses.

6. Gas flushing plug as claimed in Claim 1 or 2, characterised in that the passages (3, 3') which cross over extend on helical lines and are formed symmetrically to the cone axis.

## Revendications

1. Brique pour balayage au gaz pour applications en métallurgie comportant un élément moulé en matériau céramique réfractaire muni d'un raccord d'entrée de gaz, et des conduits (3, 3') passant à l'intérieur de celui-ci, l'élément moulé étant constitué d'une partie intérieure (4) en céramique en forme de tronc de cône et d'une partie extérieure (5) en céramique entourant celle-ci, la face supérieure (1) et la face inférieure (2) de l'élément moulé étant formée conjointement par la partie intérieure (4) et la partie extérieure (5) et les conduits (3, 3') s'étendant de la face inférieure (2) à la face supérieure (1) dans l'élément moulé caractérisé en ce que les conduits (3, 3') s'étendent en forme de réseau, en ce que des conduits (3) prévus intérieurement sur la partie extérieure (5) et des conduits (3') prévus extérieurement sur la partie intérieure (4) se croisent ou en ce que les conduits (3) sont réalisés sous forme de réseaux sur la partie extérieure (5) et aucun conduit (3, 3') n'est réalisé sur la partie intérieure (4) ou aucun conduit (3, 3') n'est réalisé sur la partie extérieure (5) et les conduits (3') sont réalisés sous forme de réseaux sur la partie intérieure (4).

2. Brique pour balayage au gaz selon la revendication 1 caractérisée en ce que la section des canaux (3, 3') a une forme de U ou de V.

3. Brique pour balayage au gaz selon la revendication 1 ou 2 caractérisée en ce que les conduits (3) sont disposés sur la partie extérieure (5) dans des plans de l'axe du cône, et les conduits (3') sur la partie intérieure (4) sont concentriques à l'axe du cône ou sont disposés sur des hélices centrées sur l'axe du cône.

4. Brique pour balayage au gaz selon la revendication 1 ou 2 caractérisée en ce que les conduits (3) sur la partie extérieure (5) sont concentriques à l'axe du cône ou sont disposés sur des hélices centrées sur l'axe du cône et les conduits (3') sont disposés sur la partie extérieure (4) dans des plans de l'axe du cône.

5. Brique pour balayage au gaz selon la revendication 1 ou 2 caractérisée en ce que sur la partie extérieure (5) et sur la partie intérieure (4) les conduits (3, 3') sont réalisés sur des hélices opposées.

6. Brique pour balayage au gaz selon la revendication 1 ou 2 caractérisée en ce que les conduits (3, 3') qui se coupent sont réalisés suivant des hélices et sont symétriques par rapport à l'axe du cône.

Fig.1

Fig.2

Fig.3

Fig. 4

Fig.5

Fig.6

Fig.7

Fig. 8

Fig.9

Fig.10

Fig.11

7